(19) Europäisches Patentamt
European Patent Office
Office européen des brevets

(11) **EP 4 063 980 A1**

(12) **EUROPÄISCHE PATENTANMELDUNG**

(43) Veröffentlichungstag:
**28.09.2022 Patentblatt 2022/39**

(21) Anmeldenummer: **21163887.9**

(22) Anmeldetag: **22.03.2021**

(51) Internationale Patentklassifikation (IPC):
*G05B 23/02* (2006.01)

(52) Gemeinsame Patentklassifikation (CPC):
**G05B 23/024; G05B 23/0281**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Labisch, Daniel
76149 Karlsruhe (DE)**

(54) **URSACHENANALYSE EINER ANOMALIE AUF BASIS VON SIMULIERTEN SYMPTOMEN**

(57) Vorgeschlagen wird ein Verfahren zur Ermittlung einer Ursache für eine Anomalie beim Betrieb einer technischen Anlage, insbesondere Fertigungs- oder Prozessanlage, umfassend: Simulation eines fehlerfreien Betriebs der technischen Anlage mittels eines computerimplementierten Simulationswerkzeuges; Simulation einer Mehrzahl von einzeln beim Betrieb der technischen Anlage auftretenden Ursachen für eine Anomalie; Für die Mehrzahl von einzeln auftretenden Ursachen für eine Anomalie, jeweils Vergleichen des simulierten fehlerfreien Betriebszustandes mit dem simulierten Betriebszustand bei Vorliegen einer der auftretenden Ursachen für eine Anomalie, wobei aus dem Vergleich jeweils ein qualitatives Symptom abgeleitet wird, welches eine qualitative Abweichung des Betriebszustandes von dem fehlerfreien Betriebszustand beschreibt; Realer Betrieb der technischen Anlage; Für den Fall, dass eine Anomalie beim realen Betrieb der technischen Anlage auftritt, Bestimmen eines qualitativen Symptoms der Anomalie; Vergleich des beim realen Betrieb der technischen Anlage bestimmten Symptoms mit jedem Symptom, das zuvor bei den Simulationen der Betriebszustände bei Vorliegen eines der auftretenden Ursachen für eine Anomalie abgeleitet worden ist; Identifizieren von denjenigen Symptomen, die ein bestimmte Ähnlichkeitsmaß zu dem beim realen Betrieb der technischen Anlage bestimmten Symptom aufweisen und Hinterlegen der zu den identifizierten Symptomen gehörigen Ursachen für die Anomalie in einem Datenspeicher der technischen Anlage und/oder Anzeigen der zu den identifizierten Symptomen gehörigen Ursachen für die Anomalie.

FIG 1

**Beschreibung**

Die Erfindung betrifft ein Verfahren zur Ermittlung einer Ursache für eine Anomalie beim Betrieb einer technischen Anlage nach Anspruch 1. Zudem betrifft die Erfindung ein Computerprogramm mit durch einen Computer ausführbaren Programmcodeanweisungen nach Anspruch 4. Außerdem betrifft die Erfindung ein Speichermedium mit einem durch einen Computer ausführbaren Computerprogramm nach Anspruch 5, einen Server, insbesondere Operator Station Server, für eine technische Anlage nach Anspruch 6 und ein Leitsystem für eine technische Anlage nach Anspruch 7.

Eine technische Anlage, insbesondere Fertigungs- oder Prozessanlage, wird in der Regel fortwährend überwacht, um ungünstige Betriebszustände zu vermeiden. Bereits die Erkennung einer Abweichung im Betrieb der technischen Anlage (Anomalieerkennung) liefert hierbei einen Mehrwert, auch wenn die Suche nach einer Ursache für die Anomalie komplett manuell erfolgen muss. Der Mehrwert kann gesteigert werden, wenn auch eine Information darüber vorliegt, welche Komponenten der technischen Anlage auf welche Art und Weise von ihrem Normalverhalten abweichen (Symptomerkennung).

Eine manuelle Suche der Ursache ist mühselig und aufwändig. Es sind daher verschiedene Bestrebungen bekannt, die Ursachen für die Abweichungen automatisch bestimmen zu können, so dass das Anlagenpersonal direkt mit der Behebung der Ursache beginnen kann. Grundsätzlich kann hierbei zwischen zwei Vorgehensweisen unterschieden werden.

Ein erster Lösungsansatz verfolgt eine rein datenbasierte Ursachensuche. Eine Identifizierung der Ursache ist dabei jedoch nur möglich, wenn die Ursache in der Vergangenheit bereits aufgetreten und entsprechend klassifiziert worden ist.

Ein zweiter Lösungsansatz basiert auf Modellen. Dabei wird ausgehend von der Anlagenstruktur der technischen Anlage (bspw. dem Rohrleitungs- & Instrumentenfließschema) ein Modell der technischen Anlage bzw. deren Komponenten erzeugt. Dieses wird anschließend dazu genutzt, erkannten Symptomen mögliche Ursachen zuzuordnen.

Zur Modellierung kommen verschiedenste Verfahren in Frage. In der EP 2568348 A1, der EP 2587328 A1 und der EP 2587329 A1 wird eine derartige Modellierung auf Basis von sogenannten "Signed Digraphs" beschrieben. Hiermit können für kleine Anlagentopologien (in der Größe einer Forschungsanlage) gute Ergebnisse bei der Ursachenermittlung erzielt werden. Für größere, reale technische Anlage sind die hierin beschriebenen Verfahren jedoch weniger gut geeignet. Insbesondere können Verzweigungen in der Anlagentopologie zu leeren Ursachenmengen oder zu übermäßig vielen möglichen Ursachen führen

[1] und [2] geben in einer Review einen systematischen Überblick über mögliche Algorithmen zur Ursachenanalyse.

[1] Venkat Venkatasubramanian, Raghunathan Rengaswamy, Kewen Yin, Surya N. Kavuri; A review of process fault detection and diagnosis Part I: Quantitative model-based methods; Computers and Chemical Engineering, issue 27, pp.293-31t,2003.

[2] Venkat Venkatasubramanian, Raghunathan Rengaswamy, Surya N. Kavuri; A review of process fault detection and diagnosis Part II: Qualitative Models and Search Strategies; Computers and Chemical Engineering, issue 27, pp.313-326, 2003.

.

Allen hierin genannten Verfahren wohnen jedoch eine verhältnismäßig große Komplexität und ein hoher Modellierungsaufwand inne.

Will man ein vorhandenes Prozessmodell als Hilfestellung für die Anomalieerkennung nutzen, so finden sich hierzu in [3] und [4] folgende drei Ansätze:

- Parameterschätz- bzw. Parameteridentifikationsverfahren
- Beobachterbasierte Verfahren
- Paritätsgleichungen

Diese Anomalieerkennungsmethoden werden für eine Fehlerdiagnose um mehrere verschiedene Fehlermodelle erweitert. Stimmt statt dem realen Modell eines der Fehlermodelle mit den Prozessdaten überein, so kann ein Fehler diagnostiziert werden. Die Fehlermodelle betrachten dabei ein bekanntes Problem in genau einer Ausführung / Fehlerstärke und treffen dann eine Aussage über einen binären Fehler (bspw. Ventil funktioniert oder Ventil funktioniert nicht). Zeigen wiederum mehrere, sich ähnelnde Fehlermodelle ein positives Diagnoseergebnis, so kann keine klare Aussage oder Empfehlung getroffen werden.

Fehler in unterschiedlicher Stärke (z.B. Materialverunreinigungen, Prozesshemmungen, etc.) lassen sich nicht mit einem Modell mit konstanten Parametern abbilden, sondern können nur mit einer Vielzahl unterschiedlicher Fehlermodelle beschrieben werden. Dadurch entsteht ein erhöhter Aufwand für die Modellierung der Fehlermodelle. Außerdem ergibt sich eine unüberschaubare Vielzahl an Modellen.

Alternativ werden beobachterbasierte Ansätze verwendet, die einen Fehlerparameter mit schätzen. Nachteilig an diesen ist, dass Beobachter nur bei einer hohen Modellgüte konvergieren und nur dann Bias-freie Schätzungen liefern, wenn beispielsweise alle Rauschannahmen korrekt erfüllt sind.

Allen Lösungen ist gemein, dass die Modellgüte sowohl für das Normal- als auch für das Fehlerverhalten sehr gut sein muss. Diese Anforderung wird schon für Modelle im Normalbetrieb nicht immer erfüllt. Mangels Fehlerdaten scheitert eine derart genaue Modellierung für Fehlerfälle jedoch im Allgemeinen.

[1]: R. Isermann, "Modellbasierte Überwachung und Fehlerdiagnose von kontinuierlichen technischen Prozessen," at, Jun 2010

[2]: S. X. Ding, "Model-Based Fault Diagnosis Techniques", Duisburg, 2013

Der Erfindung liegt die Aufgabe zugrunde, ein Verfahren zur Ermittlung einer Ursache für eine Anomalie beim Betrieb einer technischen Anlage anzugeben, das effizient, mit geringem Aufwand und automatisiert durchgeführt werden kann.

Diese Aufgabe wird gelöst durch ein Verfahren zur Ermittlung einer Ursache für eine Anomalie beim Betrieb einer technischen Anlage, insbesondere Fertigungs- oder Prozessanlage, nach Anspruch 1. Außerdem wird die Aufgabe gelöst durch ein Computerprogramm mit durch einen Computer ausführbaren Programmcodeanweisungen nach Anspruch 4. Außerdem wird die Aufgabe gelöst durch ein Speichermedium mit einem durch einen Computer ausführbaren Computerprogramm nach Anspruch 5 und einen Server, insbesondere Operator Station Server, für eine technische Anlage, insbesondere Fertigungs- oder Prozessanlage, nach Anspruch 6. Zudem wird die Aufgabe gelöst durch ein Leitsystem für eine technische Anlage, insbesondere Fertigungs- oder Prozessanlage, nach Anspruch 7. Vorteilhafte Weiterbildungen ergeben sich aus den abhängigen Ansprüchen.

Ein erfindungsgemäßes Verfahren umfasst die folgenden Verfahrensschritte:

a) Simulation eines fehlerfreien Betriebs der technischen Anlage mittels eines computerimplementierten Simulationswerkzeuges;

b) Simulation einer Mehrzahl von einzeln beim Betrieb der technischen Anlage auftretenden Ursachen für eine Anomalie;

c) Für die Mehrzahl von einzeln auftretenden Ursachen für eine Anomalie, jeweils Vergleichen des simulierten fehlerfreien Betriebszustandes mit dem simulierten Betriebszustand bei Vorliegen einer der auftretenden Ursachen für eine Anomalie, wobei aus dem Vergleich jeweils ein qualitatives Symptom abgeleitet wird, welches eine qualitative Abweichung des Betriebszustandes von dem fehlerfreien Betriebszustand beschreibt;

d) Realer Betrieb der technischen Anlage;

e) Für den Fall, dass eine Anomalie beim realen Betrieb der technischen Anlage auftritt, Bestimmen eines qualitativen Symptoms der Anomalie;

f) Vergleich des beim realen Betrieb der technischen Anlage bestimmten Symptoms mit jedem Symptom, das zuvor bei den Simulationen der Betriebszustände bei Vorliegen eines der auftretenden Ursachen für eine Anomalie abgeleitet worden ist;

g) Identifizieren von denjenigen Symptomen, die ein bestimmte Ähnlichkeitsmaß zu dem beim realen Betrieb der technischen Anlage bestimmten Symptom aufweisen und Hinterlegen der zu den identifizierten Symptomen gehörigen Ursachen für die Anomalie in einem Datenspeicher der technischen Anlage und/oder Anzeigen der zu den identifizierten Symptomen gehörigen Ursachen für die Anomalie.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, wie beispielsweise Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Das erfindungsgemäße Verfahren beruht darauf, dass reale Daten und simulierte Modelldaten über den Zwischenschritt des Einbezugs von Symptomen miteinander verglichen werden, um auf die Ursache für eine Anomalie beim Betrieb der technischen Anlage schließen zu können. Der Begriff "Symptom" stammt aus dem Bereich der Überwachung einer technischen Anlage und beschreibt die Abweichungen vom Normalbetrieb der technischen Anlage. Konkret umfasst ein Symptom die abweichenden Variablen und die Art der jeweiligen Abweichung. Diese Abweichung wird erfindungsgemäß nur qualitativ betrachtet. Beispiele für mögliche Symptome sind: Druckwert des Sensors X ist zu groß oder zu klein, Temperaturwert des Sensors Y ist viel zu klein oder viel zu groß). Die Quantisierung des qualitativen Symptoms kann auf drei Stufen begrenzt sein (größer/keine Abweichung/kleiner), kann aber auch mehr Stufen aufweisen.

Bei der Durchführung des erfindungsgemäßen Verfahrens wird angenommen, dass ein entsprechendes Simulationsmodell für die technische Anlage vorliegt. Dazu wird angenommen, dass das Simulationsmodell mögliche Anomalien umfasst, deren Intensität variiert werden kann oder die binär ausgebildet sind (Anomalie vorhanden/nicht vorhanden).

Es werden alle Simulationen von möglichen einzeln auftretenden Anomalien mit dem simulierten Normalbetrieb verglichen und die Differenz als Symptom gebildet. Da die Simulation das grundsätzliche Verhalten korrekt wiedergibt, ist auch das Symptom im Allgemeinen korrekt. Hierbei sei auch auf die Beschreibung des Ausführungsbeispiels und der damit verbundenen Beschreibung von Versuchen verwiesen.

Der große Vorteil des erfindungsgemäßen Verfahrens liegt darin, dass die Anforderung an das Simulationsmodell erheblich sinkt, da es nicht exakt und für alle Fälle kalibriert sein muss. Damit ist das Verfahren, im Gegensatz zu vielen anderen, überhaupt praktisch einsetzbar.

Es können im Verfahrensschritt g nur diejenigen Symptome identifiziert und in dem Datenspeicher hinterlegt und/oder angezeigt werden, die identisch mit dem beim realen Betrieb der technischen Anlage bestimmten Symptom sind.

Es ist aber auch möglich, dass in den Verfahrensschritten b und c für jede in Frage kommende Ursache für eine Anomalie eine Intensität der Ursache für die Anomalie in einem bestimmten Bereich variiert wird, wobei bei der Variation eine Mehrzahl von Symptomen ableitbar sein kann, die, falls zutreffend, zur Identifizierung der Ursache für die Anomalie im Schritt g verwendet werden. Hintergrund hierfür ist, dass insbesondere bei Nichtlinearitäten in der technischen Anlage eine Variation der Intensität einer Anomalie zu unterschiedlichen Symptomen (je nach Intensitätsgrad) führen kann. Durch das entsprechend weitergebildete Verfahren kann die Erkennung der Ursache für eine Anomalie deutlich verbessert werden.

Die obige Aufgabe wird zudem gelöst durch ein Computerprogramm mit durch einen Computer ausführbaren Programmcodeanweisungen zur Implementierung des zuvor erläuterten Verfahrens. Zudem wird die Aufgabe gelöst durch ein Speichermedium mit einem durch einen Computer ausführbaren, zuvor erläuterten Computerprogramm und ein Computersystem, auf dem ein Computerprogramm wie zuvor erläutert implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:

FIG 1    eine technische Anlage mit drei Tanks;

FIG 2    einen Vergleich von realen und simulierten Messdaten;

FIG 3    eine Symptombildung bei einer ersten Anomalie;

FIG 4    eine Symptombildung bei einer zweiten Anomalie; und

FIG 5    eine Symptombildung bei einer dritten Anomalie.

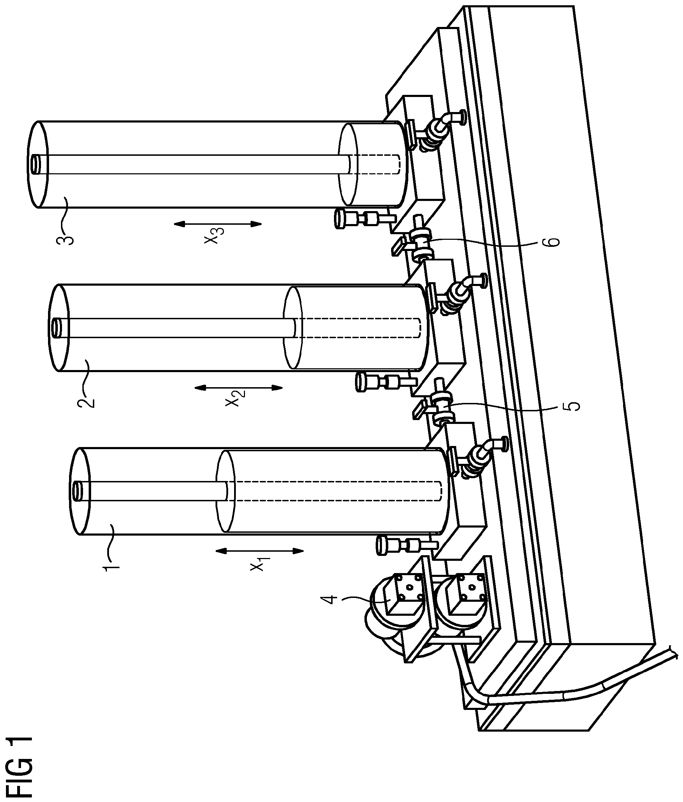

In FIG 1 ist ein realer Dreitankprüfstand als technische Anlage schematisch dargestellt. Der Dreitankprüfstand weist einen ersten Tank 1, einen zweiten Tank 2 und einen dritten Tank 3 auf. Eine Pumpe 4 ist an den ersten Tank 1 und an den dritten Tank 3 in FIG 1 angeschlossen, um beispielsweise Wasser in den jeweiligen Tank 1, 3 pumpen zu können.

Der erste Tank 1 ist mit dem zweiten Tank 2 mittels einer ersten Verbindungsleitung 5 verbunden. Der zweite Tank 2 ist mit dem dritten Tank 3 mittels einer zweiten Verbindungsleitung 6 verbunden. Aus dem dritten Tank kann Wasser über einen Ablauf entweichen. Die Füllhöhen des Wassers in den drei Tanks 1, 2, 3 nehmen von dem ersten Tank 1 nach rechts zu dem dritten Tank 3 hin in Fig 1 ab.

Die nichtlineare exakte Modellierung der Füllhöhen in den drei Tanks 1, 2, 3 ergibt folgende Zusammenhänge:

$$\dot{x}_1 = \begin{cases} \frac{1}{A_1}\left(u_1 - q_1\sqrt{2g(x_1 - x_2)}\right) \; falls \; x_1 \geq x_2 \\ \frac{1}{A_1}\left(u_1 + q_1\sqrt{2g(x_2 - x_1)}\right) \; falls \; x_1 < x_2 \end{cases}$$

$$\dot{x}_2 = \begin{cases} \frac{1}{A_2}\left(-q_1\sqrt{2g(x_2-x_1)} - q_2\sqrt{2g(x_2-x_3)}\right) falls\ x_2 \geq x_1 \wedge x_2 \geq x_3 \\ \frac{1}{A_2}\left(-q_1\sqrt{2g(x_2-x_1)} + q_2\sqrt{2g(x_3-x_2)}\right) falls\ x_2 \geq x_1 \wedge x_2 < x_3 \\ \frac{1}{A_2}\left(q_1\sqrt{2g(x_1-x_2)} - q_2\sqrt{2g(x_2-x_3)}\right) falls\ x_2 < x_1 \wedge x_2 \geq x_3 \\ \frac{1}{A_2}\left(q_1\sqrt{2g(x_1-x_2)} + q_2\sqrt{2g(x_3-x_2)}\right) falls\ x_2 < x_1 \wedge x_2 < x_3 \end{cases}$$

$$\dot{x}_3 = \begin{cases} \frac{1}{A_3}\left(u_2 - q_2\sqrt{2g(x_3-x_2)} - q_3\sqrt{2gx_3}\right) falls\ x_3 \geq x_2 \\ \frac{1}{A_3}\left(u_2 + q_2\sqrt{2g(x_2-x_3)} - q_3\sqrt{2gx_3}\right) falls\ x_3 < x_2 \end{cases}$$

Dabei bezeichnen:

$x_1$    die Füllhöhe des Wassers im ersten Tank 1;
$x_2$    die Füllhöhe des Wassers im zweiten Tank 2;
$x_3$    die Füllhöhe des Wassers im dritten Tank 3;
$A_1$    die Querschnittsfläche des ersten Tanks 1;
$A_2$    die Querschnittsfläche des zweiten Tanks 2;
$A_3$    die Querschnittsfläche des dritten Tanks 3;
$q_1$    die Querschnittsfläche der ersten Verbindungsleitung 5 zwischen dem ersten Tank 1 und dem zweiten Tank 2;
$q_2$    die Querschnittsfläche der zweiten Verbindungsleitung 6 zwischen dem zweiten Tank 2 und dem dritten Tank 3;
$q_3$    die Querschnittsfläche im Ablauf von Tank 3;
g      die Erdbeschleunigung;
$u_1$    den Zulauf in den ersten Tank 1; und
$u_2$    den Zulauf in den dritten Tank 3.

Der Betrieb dieser einfachen technischen Anlage kann durch eine Linearisierung des Systems simuliert werden. Dabei kann das folgende Simulationsmodell verwendet werden:

$$\dot{x}^* = Ax^* + Bu^*, \ x^*(0) = x_o^*$$

$$y^* = Cx^*$$

Dabei gilt für $[A|B]$:

$$\begin{pmatrix} \frac{-q_1}{A_1}\sqrt{\frac{g}{2(x_1-x_2)}} & \frac{q_1}{A_1}\sqrt{\frac{g}{2(x_1-x_2)}} & 0 \\ \frac{q_1}{A_2}\sqrt{\frac{g}{2(x_1-x_2)}} & \frac{-1}{A_2}\left(q_1\sqrt{\frac{g}{2(x_1-x_2)}} + q_2\sqrt{\frac{g}{2(x_2-x_3)}}\right) & \frac{q_2}{A_2}\sqrt{\frac{g}{2(x_2-x_3)}} \\ 0 & \frac{q_2}{A_3}\sqrt{\frac{g}{2(x_2-x_3)}} & \frac{-1}{A_3}\left(q_2\sqrt{\frac{g}{2(x_2-x_3)}} + q_3\sqrt{\frac{g}{2x_3}}\right) \end{pmatrix} \left.\begin{matrix} \frac{1}{A_1} & 0 \\ 0 & 0 \\ 0 & \frac{1}{A_3} \end{matrix}\right)$$

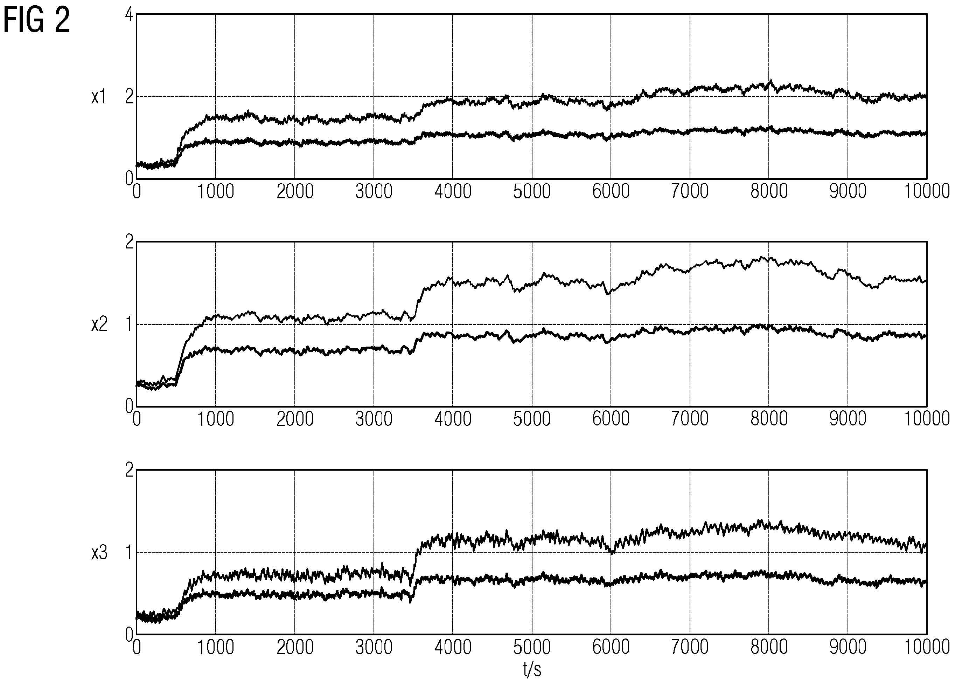

Das lineare Simulationsmodell gilt lediglich für absteigende Füllstände und wird als nicht kalibriert angenommen, indem die Parameter um 20% variiert werden. In FIG 2 ist ein Vergleich der Realdaten für die Füllhöhen x1, x2 und x3 in den drei Tanks 1, 2, 3 (nichtlineare Simulation) mit simulierten Daten, die mit dem zuvor erläuterten linearen Simulationsmodell für einen Zulaufsprung in den Zuläufen des ersten Tanks 1 und des dritten Tanks 3 ermittelt wurde, gezeigt. Gut zu erkennen sind die durch die Parametervariation und die Linearisierung entstandenen Abweichungen zwischen Simulationsdaten und den Realdaten. Dabei sind in FIG 2 die realen Daten in den zeitlichen (Verlaufs-)Diagrammen jeweils oberhalb der simulierten Werte angeordnet (also größer). Es wird dabei auch deutlich, dass das prinzipielle Verhalten der technischen Anlage durch die Simulation nachgebildet wird.

Im Folgenden werden drei mögliche Ursachen für eine Anomalie im Betrieb des Dreitankprüfstands betrachtet:

-    Ursache 1: Eine Teilblockade der Verbindungsleitung 5 zwischen dem ersten Tank 1 und dem dritten Tank 3 (Verringerung der Querschnittsfläche $q_1$)

- Ursache 2: Eine Teilblockade der Verbindungsleitung 6 zwischen dem zweiten Tank 2 und dem dritten Tank 3 (Verringerung der Querschnittsfläche $q_2$)
- Ursache 3: Eine Leckage aus dem dritten Tank 3 (Verringerung des Zulaufs $u_2$ in den dritten Tank 3)

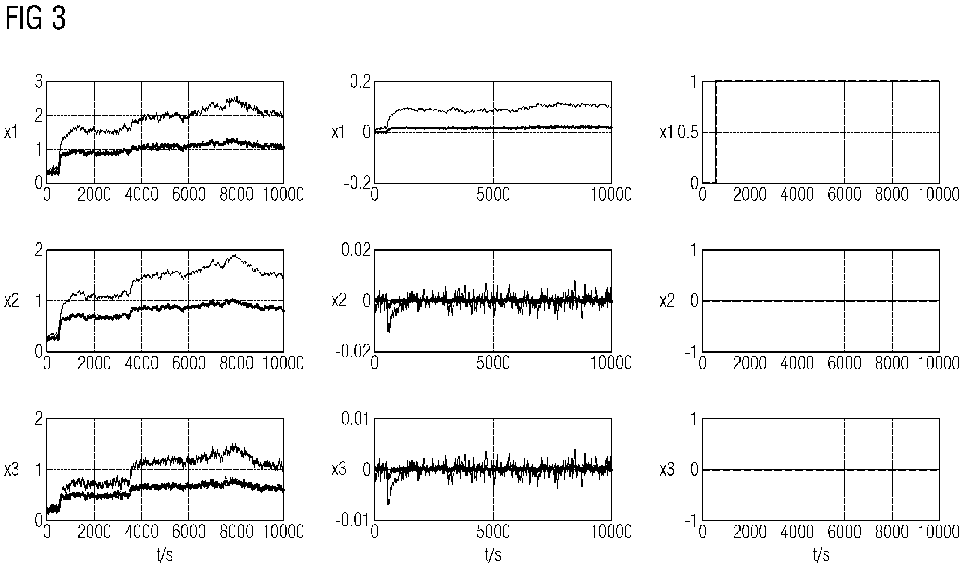

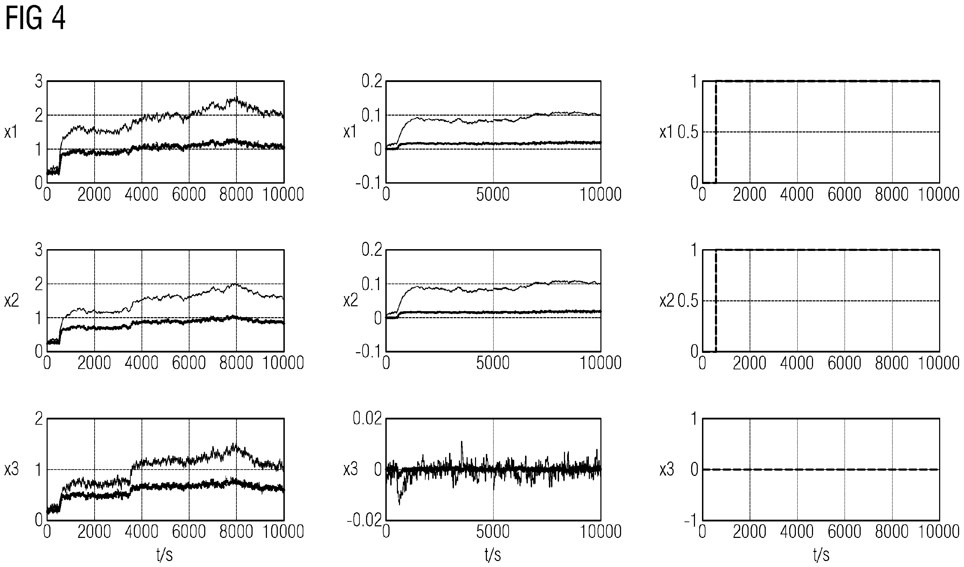

In den Figuren 3 bis 5 werden die drei Ursachen 1-3 für Anomalien nacheinander behandelt, wobei in der jeweiligen linken Spalte die realen Messdaten (d.h. die Füllhöhen $x_1$, $x_2$, $x_3$) mit den simulierten Daten verglichen werden. Hier zeigt sich, dass eine Zuordnung der Anomalien schwierig ist, da die oben erläuterten Modellfehler (20%) zu größeren Abweichungen zwischen simulierten und realen Daten führen als die Abweichungen aufgrund der Anomalien.

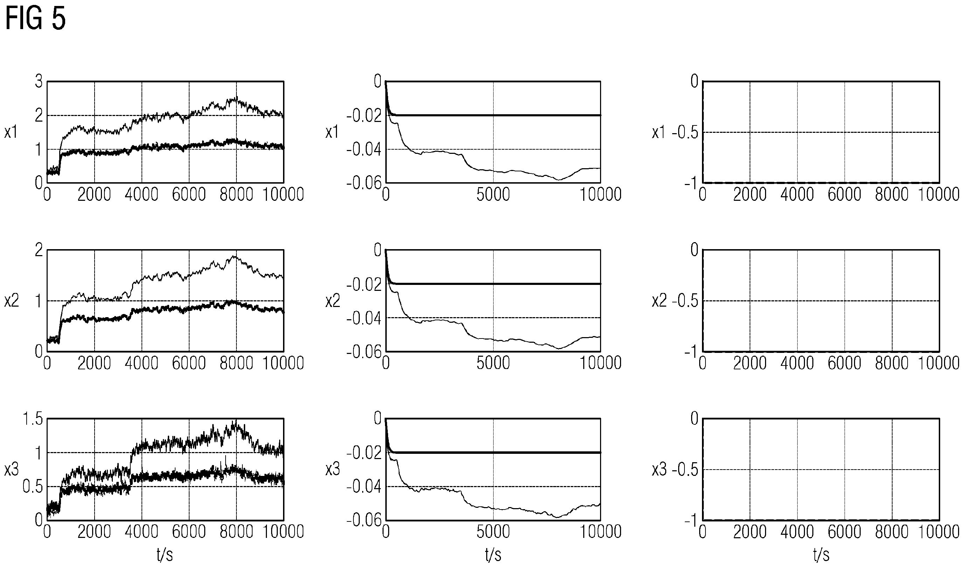

In der mittleren Spalte sind jeweils die Symptome als exakte Werte dargestellt, die für eine Diagnose noch nicht ideal geeignet sind. In der rechten Spalte werden jeweils die Symptome dargestellt, wobei die Symptome jeweils auf drei Stufen (0 = gleich, 1 = zu groß, -1 = zu klein) quantisiert wurden. In FIG 3 beispielsweise weist das quantisierte Symptom für die Füllhöhe $x_1$ einen Wert "zu groß" (hier mit 1 bezeichnet) auf. In FIG 5 beispielsweise weisen alle drei Symptome einen Wert "zu klein" (mit -1 bezeichnet) auf. Es zeigt sich, dass die quantisierten (qualitativen) Symptome der realen sowie der simulierten Messdaten übereinstimmen.

Die ermittelten Symptome beim realen Betrieb des Dreitankprüfstands werden im Anschluss mit jedem Symptom verglichen, welches zuvor bei Simulationen der Betriebszustände bei Vorliegen eines der auftretenden Ursachen für eine Anomalie abgeleitet worden ist. Daraufhin werden diejenigen Symptomen identifiziert, die ein bestimmte Ähnlichkeitsmaß zu dem beim realen Betrieb des Dreitankprüfstands bestimmten Symptom aufweisen und die zu den identifizierten Symptomen gehörigen Ursachen für die Anomalie in einem Datenspeicher hinterlegt und/oder mittels einer Anzeigeeinheit einem Bediener des Dreitankprüfstands visuell dargeboten. Aufgrund der zuvor erwähnten Übereinstimmung der Symptome von realen und simulierten Messdaten ist die Zuordnung der Symptome zu Ursachen für die jeweilige Anomalie eindeutig.

Obwohl die Erfindung im Detail durch das bevorzugte Ausführungsbeispiel näher illustriert und beschrieben wurde, so ist die Erfindung nicht auf das offenbarte Beispiel eingeschränkt und andere Variationen können vom Fachmann hieraus abgeleitet werden, ohne den Schutzumfang der Erfindung zu verlassen.

**Patentansprüche**

1. Verfahren zur Ermittlung einer Ursache für eine Anomalie beim Betrieb einer technischen Anlage, insbesondere Fertigungs- oder Prozessanlage, umfassend:

   a) Simulation eines fehlerfreien Betriebs der technischen Anlage mittels eines computerimplementierten Simulationswerkzeuges;
   b) Simulation einer Mehrzahl von einzeln beim Betrieb der technischen Anlage auftretenden Ursachen für eine Anomalie;
   c) Für die Mehrzahl von einzeln auftretenden Ursachen für eine Anomalie, jeweils Vergleichen des simulierten fehlerfreien Betriebszustandes mit dem simulierten Betriebszustand bei Vorliegen einer der auftretenden Ursachen für eine Anomalie, wobei aus dem Vergleich jeweils ein qualitatives Symptom abgeleitet wird, welches eine qualitative Abweichung des Betriebszustandes von dem fehlerfreien Betriebszustand beschreibt;
   d) Realer Betrieb der technischen Anlage;
   e) Für den Fall, dass eine Anomalie beim realen Betrieb der technischen Anlage auftritt, Bestimmen eines qualitativen Symptoms der Anomalie;
   f) Vergleich des beim realen Betrieb der technischen Anlage bestimmten Symptoms mit jedem Symptom, das zuvor bei den Simulationen der Betriebszustände bei Vorliegen eines der auftretenden Ursachen für eine Anomalie abgeleitet worden ist;
   g) Identifizieren von denjenigen Symptomen, die ein bestimmte Ähnlichkeitsmaß zu dem beim realen Betrieb der technischen Anlage bestimmten Symptom aufweisen und Hinterlegen der zu den identifizierten Symptomen gehörigen Ursachen für die Anomalie in einem Datenspeicher der technischen Anlage und/oder Anzeigen der zu den identifizierten Symptomen gehörigen Ursachen für die Anomalie.

2. Verfahren nach Anspruch 1, bei dem in Schritt g diejenigen Symptome identifiziert und in dem Datenspeicher hinterlegt und/oder angezeigt werden, die identisch mit dem beim realen Betrieb der technischen Anlage bestimmten Symptom sind.

3. Verfahren nach Anspruch 1 oder 2, bei dem in den Schritten b und c gemäß Anspruch 1 für jede in Frage kommende Ursache für eine Anomalie eine Intensität der Ursache für die Anomalie in einem bestimmten Bereich variiert wird, wobei bei der Variation eine Mehrzahl von Symptomen ableitbar sein kann, die, falls zutreffend, zur Identifizierung der Ursache für die Anomalie in Schritt g gemäß Anspruch 1 verwendet werden.

4. Computerprogramm mit durch einen Computer ausführbaren Programmcodeanweisungen zur Implementierung des Verfahrens nach einem der Ansprüche 1 bis 3.

5. Speichermedium mit einem durch einen Computer ausführbaren Computerprogramm gemäß Anspruch 5.

6. Server, insbesondere Operator Station Server, für eine technische Anlage, insbesondere Fertigungs- oder Prozessanlage, auf dem ein Computerprogramm nach Anspruch 5 implementiert ist.

7. Leitsystem für eine technische Anlage, insbesondere Fertigungs- oder Prozessanlage, welches wenigstens einen Server, insbesondere Operator Station Server, gemäß Anspruch 6 und einen Client, insbesondere Operator Station Client, aufweist.

FIG 1

EP 4 063 980 A1

FIG 2

FIG 3

EP 4 063 980 A1

FIG 4

EP 4 063 980 A1

FIG 5

**Europäisches Patentamt**
**European Patent Office**
**Office européen des brevets**

# EUROPÄISCHER RECHERCHENBERICHT

**Nummer der Anmeldung**

EP 21 16 3887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 068 220 A1 (HONEYWELL INT INC [US]) 10. Juni 2009 (2009-06-10) * das ganze Dokument * ----- | 1-7 | INV. G05B23/02 |
| A | US 2017/233104 A1 (BOLLING RANDY E [US] ET AL) 17. August 2017 (2017-08-17) * das ganze Dokument * ----- | 1 | |
| A | EP 1 766 485 A1 (CAE INC [CA]) 28. März 2007 (2007-03-28) * das ganze Dokument * ----- | 1 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 9. August 2021 | Kuntz, Jean-Marc |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 3887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2021

| Im Recherchenbericht angeführtes Patentdokument | Datum der Veröffentlichung | Mitglied(er) der Patentfamilie | Datum der Veröffentlichung |
|---|---|---|---|
| EP 2068220 A1 | 10-06-2009 | EP 2068220 A1<br>SG 153036 A1<br>US 2009150131 A1 | 10-06-2009<br>29-06-2009<br>11-06-2009 |
| US 2017233104 A1 | 17-08-2017 | CA 2956918 A1<br>FR 3047822 A1<br>GB 2548230 A<br>US 2017233104 A1 | 12-08-2017<br>18-08-2017<br>13-09-2017<br>17-08-2017 |
| EP 1766485 A1 | 28-03-2007 | CA 2510556 A1<br>EP 1766485 A1<br>US 2007233438 A1<br>WO 2006002527 A1 | 01-01-2006<br>28-03-2007<br>04-10-2007<br>12-01-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2568348 A1
- EP 2587328 A1
- EP 2587329 A1

**In der Beschreibung aufgeführte Nicht-Patentliteratur**

- **KEWEN YIN ; SURYA N. KAVURI.** A review of process fault detection and diagnosis Part I: Quantitative model-based methods. *Computers and Chemical Engineering,* 2003, (27), 293-31t
- **VENKAT VENKATASUBRAMANIAN ; RAGHU-NATHAN RENGASWAMY ; SURYA N. KAVURI.** A review of process fault detection and diagnosis Part II: Qualitative Models and Search Strategies. *Computers and Chemical Engineering,* 2003, (27), 313-326
- **R. ISERMANN.** *Modellbasierte Überwachung und Fehlerdiagnose von kontinuierlichen technischen Prozessen,* Juni 2010
- **S. X. DING.** *Model-Based Fault Diagnosis Techniques,* 2013